# EUROPEAN PATENT SPECIFICATION

(11) **EP 3 316 557 B1**
(45) Date of publication and mention of the grant of the patent: **02.10.2019**
(21) Application number: 17188209.5
(22) Date of filing: 28.08.2017
(51) Int. Cl.: H04L 29/12, H04W 12/02, H04W 84/12

(54) **ENFORCING PRIVACY ADDRESSING**
DURCHSETZUNG VON DATENSCHUTZADRESSIERUNG
MISE EN APPLICATION DE L'ADRESSAGE DE CONFIDENTIALITÉ

(30) Priority: 31.10.2016 IN 201641037264
(43) Date of publication of application: 02.05.2018
(73) Proprietor: Hewlett Packard Enterprise Development LP, Houston, TX 77070 (US)
(72) Inventor: THEOGARAJ, Isaac, 560 103 Bangalore South Taluk Karnataka (IN)
(74) Representative: Haseltine Lake Kempner LLP

(56) References cited:
- US-A1- 2005 174 998
- US-A1- 2012 057 595
- US-A1- 2015 063 205

## Description

### Background

Networks include access points that are controlled by a network aggregating network device such as a controller. The network aggregating network device can be utilized to manage, configure, monitor, and/or troubleshoot operation of the access points. The network aggregating network device can be utilized to encrypt and/or decrypt data packets received from the plurality of access points. The network aggregating network device can be utilized to configure the plurality of access points and/or change a configuration of the plurality of access points.

US2012/057595 discloses a communication system that includes an anonymizing device and a server. The anonymizing device generates an anonymous address based on a prefix acquired from the server, receives a packet transmitted from a communication node, rewrites a source address of the received packet into an anonymous address, encapsulates the received packet, and sends the packet to a second network using the address of the anonymizing device as a source address of the encapsulated packet and the address of the server as a destination address. Then, receiving the encapsulated packet transmitted from the anonymizing device, the server (200) decapsulates the encapsulated packet and sends the packet to the second network.

US2015/063205 discloses methods and apparatus for secure wireless communication through use of one or more temporary MAC addresses to identify a mobile station in a WiFi environment.

US2005/174998 discloses a method for configuring addresses in a packet switched data communication system. The method comprises providing a logical network with at least two network elements, a network element comprising at least one sub-element. The method further comprises configuring a temporary address for an interface of a sub-element, retrieving an identifier of the network element and defining an address for the interface of the sub-element by including the identifier of the network element to the temporary address.

### Brief Description of the Drawings

Figure 1 illustrates a diagram of an example of a wireless network consistent with the disclosure.
Figure 2 illustrates a diagram of an example of an aggregating network device consistent with the disclosure.
Figure 3 illustrates a flow diagram for an example of a method for enforcing privacy addressing consistent with the disclosure.
Figure 4 illustrates a diagram of an example of a non-transitory computer readable medium and processor for enforcing privacy addressing consistent with the disclosure.

### Detailed Description

Wireless networks may be deployed to provide various types of communication to multiple users through the air using electromagnetic waves. As a result, various types of communication may be provided to multiple users without cables, wires, or other physical electric conductors to couple devices in the wireless network. Examples of the various types of communication that may be provided by wireless networks include voice communication, data communication, multimedia services, etc.

The invention is solely defined by the appended claims.

An example of a wireless network is a wireless local area network (WLAN). WLANs may include stations and/or access points (APs) that may communicate over a plurality of wireless channels. As used herein, an AP is a networking hardware device that allows a wireless-compliant device (e.g., a station) to connect to a network.

An AP may provide connectivity with a network such as the internet to the stations. As used herein, a station is a device that has the capability to use the Institute of Electrical and Electronics Engineers (IEEE) 802.11 protocol. Examples of stations include smart phones, laptops, physical non-virtualized computing devices, personal digital assistants, etc. In some examples, a stations may be a device that contains an IEEE 802.11-conformant media access control (MAC) and physical layer (PHY) interface to a wireless medium (WM).

Wireless networks such as WLANs such as those defined in the IEEE wireless communications standards, e.g., IEEE 802.11a, IEEE 802.11n, IEEE 802.11ac can use various wireless communication technologies, for example, orthogonal frequency division multiplexing (OFDM), a single-in-single-out (SISO), and/or a multiple-in-multiple-out (MIMO) communication approach, among other types of approaches to transmit and receive signals. Such transmission and receiving may be performed in accordance with Internet Protocol version 6 (IPv6). IPv6 is a communication protocol that provides an identification and location system for computing devices on networks, and routes traffic across the Internet.

In various protocols such as IPv6, connection end points may be identified by unique IP addresses that reflect a topological location of the connection end points on the Internet. IPv6 may utilize an autoconfiguration process such that a unique IP addresses can be constructed in a stateless manner. As used herein, "privacy addressing" refers to a technique of stateless construction of a unique IP address in the form of a temporary address from interface identifiers that change over time. For instance, stateless construction of an IP address may include creation of a temporary address in accordance with request for comments (RFC) 4941, as described herein. RFC 4941 is described by Narten, T., Draves, R., and S. Krishnan, "Privacy Extensions for Stateless Address Autoconfiguration in IPv6", RFC 4941, September 2007.

Privacy addressing can be employed with IPv6 or similar protocol suitable for privacy addressing. For example, IPv6 capable stations may employ privacy addressing to hide information that unless hidden may make a MAC address of a station discoverable via packet traffic to/from the station. That is, the presence of a MAC address in source IPv6 address may be cause of concern as other network device in a network including the destination server can potentially identify the station MAC address as other station specific information and use the MAC address and/or other station specific information in a nefarious or undesired manner from the perspective of the station. Yet, some approaches may intentionally not use privacy addressing due to perceived issues associated with privacy addressing, among other reasons. Consequently, privacy addressing may be intentionally disabled (or not enabled) in some approaches. As a result, stations without privacy addressing may undesirably provide an avenue by which the MAC address and/or or other information of the station can be discovered by entities such as an internet service provider.

In contrast, examples herein allow for enforcing privacy addressing. Examples of the present disclosure include aggregating network devices, computer-readable media storing executable instructions, and methods for enforcing privacy addressing. In some examples, an aggregating network device can include a processor and a memory storing machine-readable instructions to cause the processor to determine a station is using a media access control (MAC) address in layer 3 communications of the station based on information included in a packet received from the station, create a temporary address based on information included in a header of the packet received from a station, and replace at least a portion of a host internet protocol (IP) address in the header of the packet with the temporary address to hide the full host IP address of the station to enforce privacy addressing of the station.

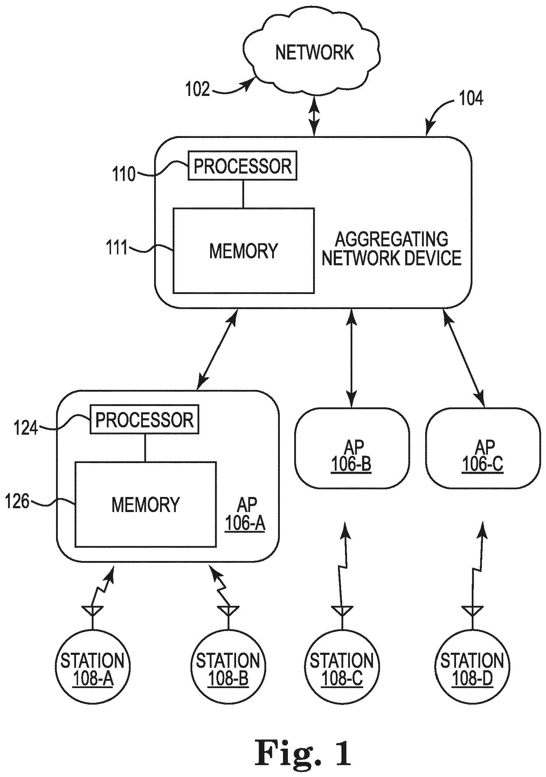

Turning now to the figures, Figure 1 illustrates a diagram of an example of an environment including a wireless network 102 consistent with the disclosure. Wireless network 102 may include an aggregating network device 104, access points (AP)s 106-A (referred to generally herein as APs 106), 106-B, ..., 106-C, stations 108-A, 108-B, 108-C ...., 108-D, (referred to generally herein as stations 108).

As indicated by the lines between the AP 106 and the stations 108, the APs 106 can provide wireless connectivity to stations 108 in the wireless network 102. Similarly, the stations 108 can be in wireless communication with the aggregating network device 104. For instance, the stations 108 can be in wireless communication with the aggregating network device via the APs 106, as illustrated in Figure 1. That is, in various examples, the network 102 can include a plurality of stations 108 in wireless communication with an aggregating network device. In such examples, privacy addressing can be enforced for each of the plurality of stations 108. In this manner, security of all stations 108 in communication with the aggregating network device 104 can be improved as compared to other approaches that do not enforce privacy addressing in stations.

An "aggregating network device" refers to a network device that includes hardware circuitry to receive and process information from multiple network devices for subsequent use in managing wireless associations between stations and network devices providing access to a network. Examples of an aggregating network device may include a controller, an AP, dedicated host server, or the like and/or combinations thereof.

As used herein, 'network device' generally includes a device that is adapted to transmit and/or receive signaling and to process information within such signaling such as a station (e.g., any data processing equipment such as a computer, cellular phone, personal digital assistant, tablet devices, etc.), an access point, data transfer devices (such as network switches, routers, controllers, etc.) or the like. The network device may be adapted with circuitry to support wireless connectivity with other network devices being part of a wireless network.

As used herein, 'AP' generally refers to receiving points for any known or convenient wireless access technology which may later become known. Specifically, the term AP is not intended to be limited to IEEE 802.11-based APs. APs generally function as an electronic device that is adapted to allow wireless devices to connect to a wired network via various communications standards.

As used herein, 'information' is generally defined as data, address, control, management (e.g., statistics) or any combination thereof. For transmission, information may be transmitted as a message, namely a collection of bits in a predetermined format. One type of message, namely a wireless message, includes a header and payload data having a predetermined number of bits of information. The wireless message may be placed in a format as one or more packets, frames or cells.

As used herein, 'wireless local area network' (WLAN) generally refers to a communications network links two or more devices using some wireless distribution method (for example, spread-spectrum or orthogonal frequency-division multiplexing radio), and usually providing a connection through an access point to the Internet; and thus, providing users with the mobility to move around within a local coverage area and still stay connected to the network

As illustrated in Figure 1, an aggregating network device 104 such as a controller can include a processor 110 and a memory 111, among other possible components (not illustrated) such as input-output interfaces, etc. Similarly, APs 108 can include a processor 124 and a memory 126, among other possible components (not illustrated) such as input-output interfaces, etc.

While Figure 1 illustrates a particular number of aggregating network device 104, APs 106, and stations 108 the disclosure is not so limited. Rather, a total number of the aggregating network device 104, the APs 106, and/or the stations 108 can be varied to include more or less aggregating network devices 104, APs 106, and/or stations 108.

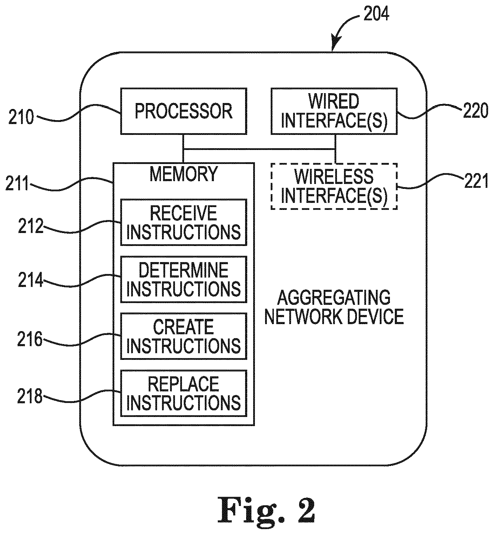

Figure 2 illustrates a diagram of an example of an aggregating network device 204 consistent with the disclosure. As illustrated in Figure 2 the aggregating network device 204 can include a processor 210, a memory 211, wired interface(s) 220, and wireless interfaces(s) 221. aggregating network device 204 can be analogous or similar to aggregating network device 104 as illustrated in Figure 1.

Processor 210 may be a central processing unit (CPU), microprocessor, and/or other hardware device suitable for retrieval and execution of instructions such as those stored in memory 211. Memory 211 may include volatile and/or non-volatile memory.

The processor 210 (i.e., processing resource and/or hardware processor) may execute instructions (e.g., determine instructions 214) stored on the non-transitory machine readable medium. The non-transitory machine readable medium can be any type of volatile or non-volatile memory or storage, such as random access memory (RAM), flash memory, read-only memory (ROM), storage volumes, a hard disk, or a combination thereof.

The memory 211 can include receive instruction 212, determine instructions 214, create instructions 216, and replace instructions 218. However, the memory can include fewer or additional instructions, in some examples. For example, in some examples, the memory can include determine instructions 214, create instructions 216, and replace instructions 218.

The receive instruction 212 can include instructions to receive a packet from a station. For instance, the receive instructions 212 can include to receive a packet at the aggregating network device 204 from a station included in a plurality of stations. The receive instructions 212 can include instructions to receive a respective packet from some stations or all stations of the plurality of stations. That is, in some examples, the receive instructions can include instructions to receive a respective packet from each station of the plurality of stations to facilitate enforcing privacy addressing for each station of the plurality of stations.

The receive instructions 212 may include instructions to receive a packet from a station that is associated with and/or attempting to associate with an AP. For instance, when a station initially associates with an AP the station may configure itself from communication on a network including the AP. For example, the station can configure itself using Neighbor Discovery Protocol via Internet Control Message Protocol version 6 (ICMPv6) router discovery messages, Dynamic Host Configuration Protocol version 6 (DHCPv6), or stations may be configured manually using static methods, among other possibilities.

For instance, when the station is first connected to a wireless network, the station can send a link-local router solicitation (e.g., as a multicast) request for its configuration parameters. In response, routers (not shown) can respond to the solicitation request with a router advertisement packet that contains Internet Layer configuration parameters and/or prefix advertisements, among other information such as information that can enable stateless router configuration and/or facilitate the station to associate with an AP, for instance, via stateless address autoconfiguration (SLAAC) in accordance with RFC 2462. RFC 2462 is described by Thomson, Susan; Narten, Thomas; "IPv6 Stateless Address Autoconfiguration"; RFC 2462; Copyright Internet Society, Dec. 1998; pp. 1-25.

The station can generate an IP address and utilize the Internet Layer configuration parameters provided from the router to communicate on the network. As mentioned, the IP address can be based on a MAC address of the station. The receive instructions 212 can include instructions to receive a first packet (e.g., a first IPv6 packet) sent from the station that includes the IP address. The IP address can be included in a header of the packet. However, the disclosure is not so limited. Rather, the receive instructions 212 can include instructions to receive subsequent packets sent from the station.

The determine instructions 214 including instructions to determine a station is using a MAC address in Open Systems Interconnection (OSI) Layer-3 (Layer 3) communications of the station based on information included in a packet received from the station. For instance, the determine instructions 214 can include instructions to determine that the station is using a MAC address based on information including in the packet header and/or information included in the packet body.

For example, the determine instructions 214 can, in response to receipt of a packet by receive instructions 212, determine whether information in the form of bits included in a header of the packet indicate that the station is using a MAC address in a layer 3 communication. In some example, the determine instructions can determine, based on a host portion of the IP address, whether the station is using a MAC address in a layer 3 communication.

The host portion can refer 64 bits in an IP address, among other possible bit strings of a known length. For instance, the host portion can refer to an Extended Unique Identifier (EUI) in accordance with RFC 2373. RFC 2372 is described by Deering et al.-"RFC 2372", Cisco Systems, Jul. 1998 (24 pages). By addition, subtraction, correlation, and/or inversion, etc. of bits in the host portion of the IP address it can be determined whether the station employs a MAC addresses in its layer 3 communications. Specifically, the presence of a 16-bit OxFFFE in the host portion of the IP address indicates station is using a MAC address in its layer 3 communications, whereas a lack of a 16-bit OxFFFE in the host portion of the IP address indicates a station is not using a MAC address in its layer 3 communications.

However, the disclosure is not so limited. For instance, if the first 24 bits (excluding the 7^{th} bit) and the last 24 bits of the host portion correspond to bits in a header of a layer 2 packet from the station than it can also be determined that the station employs a MAC address in its layer 3 communications, among other possible approaches of determining whether the station uses a MAC address in its layer 3 communications. Regardless of the particular methodology of determining whether a station uses a MAC address in its layer 3 communications it is noted that the determine instructions 214 in some examples determine whether each respective station of a plurality of stations is using a respective MAC address in its layer 3 communications to promote enforcing privacy addressing for each respective station of the plurality of stations.

The create instructions 216 can create a temporary address based on information included in a header of the packet received from the station. The create instructions 216 can directly cause a device (e.g., a controller) to create a temporary address and/or can be executed with the expectation of causing another device (e.g., a station) to create a temporary address. For instance, the create instructions 216 can include instructions to create a temporary address in accordance with RFC 4941.

For example, the create instructions 216 can include instructions to create temporary addresses from interface identifiers that change over time. As used herein, the temporary addresses (i.e., global scope addresses) refer to "Global unicast addresses" such as those defined in Hinden, R. and S. Deering, "IP Version 6 Addressing Architecture", RFC 4291, February 2006 and/or "Unique local addresses" such as those as defined in Hinden, R. and B. Haberman, "Unique Local IPv6 Unicast Addresses", RFC 4193, October 2005.

Specifically, the create instructions 216 can include instructions to:
1) Process the Prefix Information Option (e.g., as defined in Thomson, S., Narten, T., and T. Jinmei, "IPv6 Stateless Address Autoconfiguration", RFC 4862 September 2007) either creating a new public address or adjusting the lifetimes of existing addresses, both public and temporary. If a received option will extend the lifetime of a public address, the lifetimes of temporary addresses should be extended, subject to the overall constraint that no temporary addresses should ever remain "valid" or "preferred" for a time longer than (TEMP_VALID_LIFETIME) or (TEMP_PREFERRED_LIFETIME -DESYNC_FACTOR), respectively. The configuration variables TEMP_VALID_LIFETIME and TEMP_PREFERRED_LIFETIME correspond to approximate target lifetimes for temporary addresses;
2) associate with each temporary address a creation time (called CREATION_TIME) that indicates the time at which the address was created. When updating the preferred lifetime of an existing temporary address, it would be set to expire at whichever time is earlier: the time indicated by the received lifetime or (CREATION_TIME + TEMP_PREFERRED_LIFETIME - DESYNC_FACTOR). A similar approach can be used with the valid lifetime.
3) When a new public address is created (as described in Thomson, S., Narten, T., and T. Jinmei, "IPv6 Stateless Address Autoconfiguration", RFC 4862 September 2007) the station (i.e., node) SHOULD also create a new temporary address
4) When creating a temporary address, the lifetime values are derived from the corresponding prefix as follows:
   Its Valid Lifetime is the lower of the Valid Lifetime of the public address or TEMP_VALID_LIFETIME. Its Preferred Lifetime is the lower of the Preferred Lifetime of the public address or TEMP_PREFERRED_LIFETIME - DESYNC_FACTOR.
5) A temporary address is created when this calculated Preferred Lifetime is greater than REGEN_ADVANCE time units. In particular, an implementation can NOT create a temporary address with a zero Preferred Lifetime.
6) New temporary addresses are created by appending the interface's current randomized interface identifier to the prefix that was received.
7) The node can perform duplicate address detection (DAD) on the generated temporary address. If DAD indicates the address is already in use, the node can generate a new randomized interface identifier as described in (8) below, and repeat (1) - (6) as appropriate up to TEMP_IDGEN_RETRIES times. If after TEMP_IDGEN_RETRIES consecutive attempts no non-unique address was generated, the node can log a system error and can NOT attempt to generate temporary addresses for that interface. Note that DAD is performed on every unicast address generated from this randomized interface identifier.
(8) Generation of a new randomized interface identifier can occur via a first approach in the presence of the presence of stable storage that can be used to record state history for use as input into the next iteration of the calculation across system restarts or via a second approach by be utilized to addresses the case where stable storage is unavailable and there is a demand to generate randomized interface identifiers without a previous state. Generation via each approach is further detailed in RFC 4291.

The create instructions 216 can create the temporary address in response to the determine instructions 214 determining a stations employs its MAC address in layer 3 communications, as described herein. Notably, the create instructions can create respective temporary address for each respective station of a plurality of stations to facilitate enforcing privacy addressing for each respective station of the stations.

The temporary address can have an expiration in accordance with RFC 4941. For example, the create instructions 216 can include instructions to cause the temporary address to expire upon satisfying a threshold lifetime of the temporary address. In some examples, new temporary addresses are generated periodically to replace temporary addresses that expire, with the exact time between address generation a matter of local policy.

The replace instructions 218 can include instructions to replace at least a portion of a host IP address in the header of the packet with the temporary address. Such replacement can hide the full host IP address of the station (e.g., from an internet service provider) to enforce privacy addressing of the station.

The replace instructions 219 can directly cause a device (e.g., a controller) to replace a portion of a host IP address in a header of a packet and/or can be executed with the expectation of causing another device (e.g., a station) to replace a portion of a host IP address in a header of a packet. For instance, the replace instructions 218 can include instruction to replace at least a portion of a host accordance with RFC 4941.

The replace instructions 218 can include instructions to cause the processor to perform network address translation (NAT) of the host IP address using the temporary address, for instance, in accordance with RFC 4941. In some example, the replace instructions 218 can include instructions to replace at least 64 bits of a host IP address with a temporary address.

For example, the replace instructions 218 can include instructions to replace at least 64 bits of a host IPv6 address of a station with 64 bits of a temporary address. In some examples, the replace instructions 218 can include instructions to replace the first 24 bits of a host IPv6 address with the 24 bits of the temporary address and the replace the last 24 bits of the host IPv6 address with another 24 bits of the temporary address. That is, in some examples, some but not all of a host IP address can be replaced.

Notably, the replace instructions 218 can include instructions to replace at least a portion of a respective host IP address for each respective station of a plurality of stations that is determined to use a respective MAC address in its layer 3 communication. In this manner, privacy addressing can be enforced for each respective station of the stations.

Although the description refers to processor 210 and a memory 211, the descriptions may also apply to a system with multiple processor and multiple memories. In such examples, the instructions may be distributed across multiple memories and the instructions may be distributed across multiple processors. Put another way, the instructions may be stored across multiple machine-readable storage mediums and executed across multiple processors, such as in a distributed computing environment.

Wired interface(s) 220 can be an IEEE 802.3 Ethernet interface, used for wired connections to other network devices such as switches, or to a controller, among other possibilities. Wireless interface(s) 221 can be an IEEE 802.11 wireless interfaces such as a plurality of radio units operating within different wireless frequency bands (e.g., 2.4 gigahertz "GHz", 5-GHz, etc.), among other possibilities.

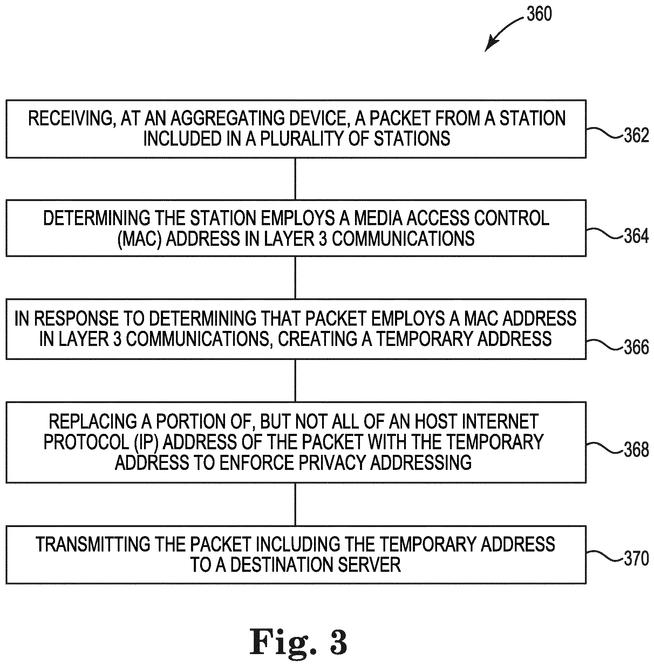

Figure 3 illustrates a flow diagram for an example of a method 360 for enforcing privacy addressing consistent with the disclosure. At 362, the method 360 can include receiving, at an aggregating network device, a packet from a station included in a plurality of stations.

At 364, the method 360 can include determining the station employs a MAC address in layer 3 communications. In some examples, the method 360 can include determining the station employs a MAC address in layer 3 communications based on the host IP address included in a header of the packet received at the aggregating network device. At 366, the method 360 can include in response to determining that packet employs a MAC address in layer 3 communications, creating a temporary address based on information included in the header of the packet. In some examples, the method 360 can include creating a temporary address in accordance with RFC 4941, as described herein.

At 368, the method 360 can include replacing a portion of, but not all of a host IP address of the packet with the temporary address to enforce privacy addressing. At 370, the method 360 can include transmitting the packet including the temporary address to a destination server, as illustrated at 370. That is, the packet including the temporary address can be transmitted between the station and another network device such as a destination server.

In some examples, the method 360 can include receiving a packet and determining that the packet does not use a MAC address in its layer 3 communications, as described herein. In such examples, the method 360 can include transmitting the packet without replacing an address (e.g., a host IP address) in a header of the packet.

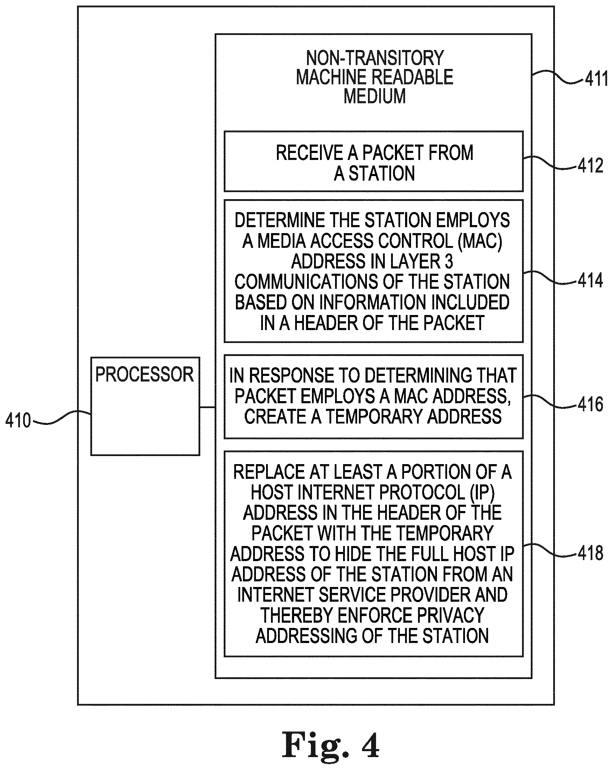

Figure 4 illustrates a diagram of an example of a non-transitory computer readable medium 411 and processor 410 for enforcing privacy addressing consistent with the disclosure. As mentioned, the processor 410 may execute instructions stored on the non-transitory machine readable medium 411 (i.e., memory). The non-transitory machine readable medium 411 may be any type of volatile or non-volatile memory or storage, such as random access memory (RAM), flash memory, read-only memory (ROM), storage volumes, a hard disk, or a combination thereof.

In various examples, the medium 411 may store instructions 412 executable by the processing resource 410 to receive a packet from a station. In some examples, the instructions can include instructions to receive a respective packet from each respective station of a plurality of stations that are couple to an AP. For example, the instructions receive respective packets from each respective station of a plurality of stations coupled to two or more access points, among other possibilities.

In various examples, the medium 411 may store instructions 414 executable by the processing resource 410 to determine the station employs a media access control (MAC) address in layer 3 communications of the station based on information included in a header of the packet, as described herein. In various examples, the example medium 411 may store instructions 416 executable by the processing resource 410 to in response to determining that packet employs a MAC address, create a temporary address based on information included in the header of the packet, as described herein.

In various examples, the medium 411 may store instructions 418 executable by the processing resource 410 to replace at least a portion of a host IP address in the header of the packet with the temporary address to hide the full host IP address of the station to enforce privacy addressing of the station. That is, such replacement can desirably thwart potential attempts to identify a MAC address of the station based on the host IP address of the station.

In some examples the medium 411 may store instructions (not illustrated) executable by the processor 410 to replace at least 64 bits of the host IP address of the station with the temporary address. In some examples the medium 411 may store instructions (not illustrated) executable by the processor 410 to cause the temporary address to expire upon satisfying a threshold lifetime of the temporary address.

In the foregoing detailed description of the present disclosure, reference is made to the accompanying drawings that form a part hereof, and in which is shown by way of illustration how various examples of the disclosure may be practiced. These examples are described in sufficient detail to enable those of ordinary skill in the art to practice the examples of this disclosure, and it is to be understood that other examples may be utilized and that process, electrical, and/or structural changes may be made without departing from the scope of the present disclosure.

As used herein, designators such as "N", etc., particularly with respect to reference numerals in the drawings, indicate that a number of the particular feature so designated can be included. As used herein, "a number of" a particular thing can refer to one or more of such things. A "plurality of" is intended to refer to more than one of such things. Multiple like elements may be referenced herein generally by their reference numeral without a specific identifier at the end. For example, a plurality of stations 108-A, ..., 108-D may be referred to herein generally as stations 108.

The figures herein follow a numbering convention in which the first digit corresponds to the drawing figure number and the remaining digits identify an element or component in the drawing. For example, reference numeral 110 may refer to element "10" in Figure 1 and an analogous element may be identified by reference numeral 220 in Figure 2. Elements shown in the various figures herein can be added, exchanged, and/or eliminated so as to provide a number of additional examples of the present disclosure. In addition, the proportion and the relative scale of the elements provided in the figures are intended to illustrate the examples of the present disclosure, and should not be taken in a limiting sense.

## Claims

1. An aggregating network device (204) comprising:
a processor (210); and
a memory (211) storing machine-readable instructions to cause the processor (210) to:
determine (214) that a station (108) of a wireless network (102) that includes the aggregating network device (204) is using a media access control, MAC, address in layer 3 communications of the station (108) based on information included in a packet received from the station;
in response to the determination create (216) a temporary address; and
replace (218) at least a portion of a host internet protocol, IP, address in the header of the packet with the temporary address to hide the full host IP address of the station (108) to enforce privacy addressing of the station,
wherein the packet comprises a packet in accordance with Internet Protocol version 6, IPv6; and
wherein the instructions to determine that the station (108) is using a MAC address in layer 3 communications of the station (108) include instructions to:
determine the presence of a 16-bit OxFFFE string in a host portion of the IP address; or
determine that the first 24 bits, excluding the seventh bit, and the last 24 bits of the host portion of the IP address correspond to bits in a header of a layer 2 packet from the station.

2. The aggregating network device of claim 1, wherein the aggregating network device is in a form of a controller, an access point, a dedicated host server or a combination thereof.

3. The aggregating network device of claim 1, wherein the aggregating network device is in the form of a controller.

4. The aggregating network device of claim 1, wherein the instruction to replace further include instructions to cause the processor to perform network address translation, NAT, of the host IP address using the temporary address.

5. The aggregating network device of claim 1, further including instructions to replace at least 64 bits of the host IP address of the station with the temporary address.

6. The aggregating network device of claim 1, further including instructions to cause the processor to cause the temporary address to expire upon satisfying a threshold lifetime of the temporary address.

7. A non-transitory computer-readable storage medium (411) comprising instructions which, when executed by a processor (210) of an aggregating network device (204), are to:
receive (412) a packet from a station (108) of a wireless network (102) that includes the aggregating network device (204);
determine (414) the station employs a media access control, MAC, address in layer 3 communications of the station (108) based on information included in a header of the packet;
in response to determining that packet employs a MAC address, create (416) a temporary address; and
replace (418) at least a portion of a host internet protocol, IP, address in the header of the packet with the temporary address to hide the full host IP address of the station to enforce privacy addressing of the station,
wherein the packet comprises a packet in accordance with Internet Protocol version 6, IPv6; and
wherein the instructions to determine that the station (108) employs a MAC address in layer 3 communications of the station (108) include instructions to:
determine the presence of a 16-bit OxFFFE string in a host portion of the IP address; or
determine that the first 24 bits, excluding the seventh bit, and the last 24 bits of the host portion of the IP address correspond to bits in a header of a layer 2 packet from the station.

8. The medium of claim 7, including instructions to replace at least 64 bits of a host IPv6 address of the station with 64 bits of the temporary address.

9. The medium of claim 8, including instructions to replace the first 24 bits of the host IPv6 address with the 24 bits of the temporary address and the replace the last 24 bits of the host IPv6 address with another 24 bits of the temporary address.

10. A method, comprising:
receiving (362), at an aggregating network device, a packet from a station included in a plurality of stations of a wireless network that includes the aggregating network device;
determining (364) the station employs a media access control, MAC, address in layer 3 communications;
in response to determining that packet employs a MAC address in layer 3 communications, creating (366) a temporary address; replacing (368) a portion of, but not all of a host internet protocol, IP,
address of the packet with the temporary address to enforce privacy addressing; and
transmitting (370) the packet including the temporary address to a destination server,
wherein the packet comprises a packet in accordance with Internet Protocol version 6, IPv6; and
wherein determining that the station (108) employs a MAC address in layer 3 communications comprises:
determining the presence of a 16-bit OxFFFE string in a host portion of the IP address; or
determining that the first 24 bits, excluding the seventh bit, and the last 24 bits of the host portion of the IP address correspond to bits in a header of a layer 2 packet from the station.

11. The method of claim 10, including determining the packet employs a MAC address based on the host IP address included in a header of the packet received at the aggregating network device.

12. The method of claim 10, further comprising determining a packet does not use a MAC address in its layer 3 communications and transmitting the packet without replacing an address in a header of the packet.

13. The method of claim 10, further comprising creating the temporary address in accordance with request for comments RFC 4941.

## Patentansprüche

1. Aggregierende Netzwerkvorrichtung (204), die Folgendes umfasst:
einen Prozessor (210); und
einen Speicher (211), der maschinenlesbare Anweisungen speichert, um den Prozessor (210) zu Folgendem zu veranlassen:
Bestimmen (214), dass eine Station (108) eines drahtlosen Netzwerks (102), das die aggregierende Netzwerkvorrichtung (204) beinhaltet, eine Adresse der Medienzugriffssteuerung, MAC, in Schicht-3-Kommunikationen der Station (108) verwendet, basierend auf Informationen, die in einem von der Station empfangenen Paket enthalten sind;
Erstellen (216) einer temporären Adresse als Reaktion auf die Bestimmung; und
Ersetzen (218) mindestens eines Abschnitts einer Adresse eines Internet-Hostprotokolls, IP, in dem Header des Pakets durch die temporäre Adresse, um die vollständige Host-IP-Adresse der Station (108) zu verbergen, um die Privatsphären-Adressierung der Station zu verstärken, wobei das Paket ein Paket gemäß der Internet-Protokoll-Version 6, IPv6, umfasst; und
wobei die Anweisungen zur Bestimmung, dass die Station (108) eine MAC-Adresse in Schicht-3-Kommunikationen der Station (108) verwendet, Anweisungen beinhalten, um:
das Vorhandensein eines 16-Bitx-0xFFFE-Strings in einem Hostabschnitt der IP-Adresse zu bestimmen; oder
zu bestimmen, dass die ersten 24 Bits, mit Ausnahme des siebten Bits, und die letzten 24 Bits des Hostabschnitts der IP-Adresse Bits in einem Header eines Schicht-2-Pakets von der Station entsprechen.

2. Aggregierende Netzwerkvorrichtung nach Anspruch 1, wobei die aggregierende Netzwerkvorrichtung in Form eines Controllers, eines Zugriffspunktes, eines dedizierten Hostservers oder einer Kombination davon vorliegt.

3. Aggregierende Netzwerkvorrichtung nach Anspruch 1, wobei die aggregierende Netzwerkvorrichtung in Form eines Controllers vorliegt.

4. Aggregierende Netzwerkvorrichtung nach Anspruch 1, wobei die Anweisung zum Ersetzen ferner Anweisungen beinhaltet, um den Prozessor zu veranlassen, die Netzwerkadressübersetzung, NAT, der Host-IP-Adresse unter Verwendung der temporären Adresse auszuführen.

5. Aggregierende Netzwerkvorrichtung nach Anspruch 1, die ferner Anweisungen zum Ersetzen von mindestens 64 Bits der Host-IP-Adresse der Station mit der temporären Adresse beinhaltet.

6. Aggregierende Netzwerkvorrichtung nach Anspruch 1, die ferner Anweisungen beinhaltet, um den Prozessor zu veranlassen, die temporäre Adresse verfallen zu lassen, nachdem eine Schwelllebensdauer der temporären Adresse erreicht ist.

7. Nichtflüchtiges, computerlesbares Speichermedium (411), das Anweisungen umfasst, welche, wenn sie von einem Prozessor (210) einer aggregierenden Netzwerkvorrichtung (204) ausgeführt werden:
ein Paket von einer Station (108) eines drahtlosen Netzwerks (102) empfangen (412), das die aggregierende Netzwerkvorrichtung (204) beinhaltet;
bestimmen (414), dass die Station eine Adresse der Medienzugriffssteuerung, MAC, in Schicht-3-Kommunikationen der Station (108) verwendet, basierend auf Informationen, die in einem Header des Pakets enthalten sind;
als Reaktion auf das Bestimmen, dass das Paket eine MAC-Adresse verwendet, eine temporäre Adresse erstellen (416); und
mindestens einen Abschnitt einer Adresse eines Internet-Hostprotokolls, IP, in dem Header des Pakets durch die temporäre Adresse ersetzen (418), um die vollständige Host-IP-Adresse der Station zu verbergen, um die Privatsphären-Adressierung der Station zu verstärken, wobei das Paket ein Paket gemäß der Internet-Protokoll-Version 6, IPv6, umfasst; und
wobei die Anweisungen zur Bestimmung, dass die Station (108) eine MAC-Adresse in Schicht-3-Kommunikationen der Station (108) verwendet, Anweisungen beinhalten, um:
das Vorhandensein eines 16-Bitx-0xFFFE-Strings in einem Hostabschnitt der IP-Adresse zu bestimmen; oder
zu bestimmen, dass die ersten 24 Bits, mit Ausnahme des siebten Bits, und die letzten 24 Bits des Hostabschnitts der IP-Adresse den Bits in einem Header eines Schicht-2-Pakets von der Station entsprechen.

8. Medium nach Anspruch 7, das Anweisungen zum Ersetzen von mindestens 64 Bits einer Host-IPv6-Adresse der Station durch 64 Bits der temporären Adresse beinhaltet.

9. Medium nach Anspruch 8, das Anweisungen zum Ersetzen der ersten 24 Bits der Host-IPv6-Adresse durch die 24s Bit der temporären Adresse und Anweisungen zum Ersetzen der letzten 24 Bits der Host-IPv6-Adresse durch weitere 24 Bits der temporären Adresse beinhaltet.

10. Verfahren, Folgendes umfassend:
Empfangen (362), an einer aggregierenden Netzwerkvorrichtung, eines Pakets von einer Station, die die mehreren Stationen eines drahtlosen Netzwerks beinhalten, das die aggregierende Netzwerkvorrichtung beinhaltet;
Bestimmen (364), dass die Station eine Adresse der Medienzugriffssteuerung, MAC, in Schicht-3-Kommunikationen verwendet;
Erstellen einer temporären Adresse (366) als Reaktion auf das Bestimmen, dass das Paket eine MAC-Adresse in Schicht-3-Kommunikationen verwendet;
Ersetzen (368) eines Abschnitts, aber nicht der gesamten Adresse eines Host-Internetprotokolls, IP, des Pakets durch die temporäre Adresse, um die Privatsphären-Adressierung zu verstärken; und
Übertragen (370) des Pakets, das die temporäre Adresse beinhaltet, an einen Zielserver, wobei das Paket ein Paket gemäß der Internet-Protokoll-Version 6, IPv6, umfasst; und
wobei das Bestimmen, dass die Station (108) eine MAC-Adresse in Schicht-3-Kommunikationen verwendet, Folgendes umfasst:
Bestimmen des Vorhandenseins eines 16-Bitx-0xFFFE-Strings in einem Hostabschnitt der IP-Adresse; oder
Bestimmen, dass die ersten 24 Bits, mit Ausnahme des siebten Bits, und die letzten 24 Bits des Hostabschnitts der IP-Adresse den Bits in einem Header eines Schicht-2-Pakets von der Station entsprechen.

11. Verfahren nach Anspruch 10, welches das Bestimmen, dass das Paket eine MAC-Adresse basierend auf der Host-IP-Adresse verwendet, die in einem Header des Pakets enthalten ist, das an der aggregierenden Netzwerkvorrichtung empfangen wird, beinhaltet.

12. Verfahren nach Anspruch 10, das ferner ein Bestimmen eines Pakets, das keine MAC-Adresse in seinen Schicht-3-Kommunikationen verwendet, und das Übertragen des Pakets, ohne eine Adresse in einem Header des Pakets zu ersetzen, umfasst.

13. Verfahren nach Anspruch 10, das ferner das Erstellen der temporären Adresse gemäß der Bitte um Kommentare RFC 4941 umfasst.

## Revendications

1. Dispositif de réseau d'agrégation (204) comprenant :
un processeur (210) ; et
une mémoire (211) stockant des instructions lisibles par machine pour amener le processeur (210) à :
déterminer (214) qu'une station (108) d'un réseau sans fil (102) qui comprend le dispositif de réseau d'agrégation (204) utilise une adresse de contrôle d'accès au support, MAC, dans les communications de couche 3 de la station (108) sur la base d'informations comprises dans un paquet reçu de la station ;
en réponse à la détermination, créer (216) une adresse temporaire ; et
remplacer (218) au moins une partie d'une adresse d'un protocole internet, IP, hôte dans l'en-tête du paquet par l'adresse temporaire pour masquer l'adresse IP hôte complète de la station (108) afin de renforcer l'adressage privé de la station, dans lequel le paquet comprend un paquet conformément au protocole Internet version 6, IPv6 ; et
dans laquelle les instructions pour déterminer que la station (108) utilise une adresse MAC dans les communications de la couche 3 de la station (108) comprennent des instructions pour :
déterminer la présence d'une chaîne 0xFFFE 16 bits dans une partie hôte de l'adresse IP ; ou
déterminer que les 24 premiers bits, à l'exception du septième bit, et les 24 derniers bits de la partie hôte de l'adresse IP correspondent à des bits dans un en-tête d'un paquet de la couche 2 de la station.

2. Dispositif de réseau d'agrégation selon la revendication 1, dans lequel le dispositif de réseau d'agrégation est sous la forme d'un contrôleur, d'un point d'accès, d'un serveur hôte dédié ou d'une combinaison de ceux-ci.

3. Dispositif de réseau d'agrégation selon la revendication 1, dans lequel le dispositif de réseau d'agrégation est sous la forme d'un contrôleur.

4. Dispositif de réseau d'agrégation selon la revendication 1, dans lequel l'instruction de remplacement doit en outre inclure des instructions pour amener le processeur à effectuer la traduction d'adresse réseau, NAT, de l'adresse IP hôte en utilisant l'adresse temporaire.

5. Dispositif de réseau d'agrégation selon la revendication 1, comprenant en outre des instructions pour remplacer au moins 64 bits de l'adresse IP hôte de la station par l'adresse temporaire.

6. Dispositif de réseau d'agrégation selon la revendication 1, comprenant en outre des instructions pour amener le processeur à faire expirer l'adresse temporaire après avoir atteint une durée de vie seuil de l'adresse temporaire.

7. Un support de stockage non transitoire lisible par ordinateur (411) comprenant des instructions qui, lorsqu'elles sont exécutées par un processeur (210) d'un dispositif de réseau d'agrégation (204), sont destinées à :
recevoir (412) un paquet provenant d'une station (108) d'un réseau sans fil (102) qui comprend le dispositif de réseau d'agrégation (204) ;
déterminer (414) que la station utilise une adresse de contrôle d'accès au support, MAC, dans les communications de couche 3 de la station (108) sur la base des informations comprises dans un en-tête du paquet ;
en réponse à la détermination que le paquet utilise une adresse MAC, créer (416) une adresse temporaire ; et
remplacer (418) au moins une partie d'une adresse d'un protocole Internet, IP, hôte dans l'en-tête du paquet par l'adresse temporaire pour masquer l'adresse IP hôte complète de la station afin de renforcer l'adressage privé de la station, dans lequel le paquet comprend un paquet conformément au protocole Internet version 6, IPv6 ; et
dans lequel les instructions pour déterminer que la station (108) emploie une adresse MAC dans les communications de couche 3 de la station (108) incluent des instructions pour :
déterminer la présence d'une chaîne 0xFFFE 16 bits dans une partie hôte de l'adresse IP ; ou
déterminer que les 24 premiers bits, à l'exception du septième bit, et les 24 derniers bits de la partie hôte de l'adresse IP correspondent à des bits dans un en-tête d'un paquet de la couche 2 de la station.

8. Support selon la revendication 7, comprenant les instructions pour remplacer au moins 64 bits d'une adresse IPv6 hôte de la station par 64 bits de l'adresse temporaire.

9. Support selon la revendication 8, comprenant les instructions pour remplacer les 24 premiers bits de l'adresse IPv6 hôte par les 24 bits de l'adresse temporaire et pour remplacer les 24 derniers bits de l'adresse IPv6 hôte par 24 autres bits de l'adresse temporaire.

10. Procédé consistant à :
recevoir (362), sur un dispositif de réseau d'agrégation, un paquet provenant d'une station comprise dans une pluralité de stations d'un réseau sans fil qui comprend le dispositif de réseau d'agrégation ;
déterminer (364) que la station utilise une adresse de contrôle d'accès au support, MAC, dans les communications de couche 3 ;
en réponse à la détermination que le paquet utilise une adresse MAC dans les communications de couche 3, créer (366) une adresse temporaire ;
remplacer (368) une partie, mais pas la totalité, de l'adresse d'un protocole Internet, IP, hôte du paquet par l'adresse temporaire afin renforcer l'adressage privé ; et
transmettre (370) le paquet comprenant l'adresse temporaire à un serveur de destination, dans lequel le paquet comprend un paquet conformément au protocole Internet version 6, IPv6; et
dans lequel déterminer que la station (108) emploie une adresse MAC dans des communications de couche 3 consiste à :
déterminer la présence d'une chaîne 0xFFFE 16 bits dans une partie hôte de l'adresse IP ; ou
déterminer que les 24 premiers bits, à l'exception du septième bit, et les 24 derniers bits de la partie hôte de l'adresse IP correspondent à des bits dans un en-tête d'un paquet de couche 2 de la station.

11. Le procédé selon la revendication 10, comprenant la détermination que le paquet utilise une adresse MAC sur la base d'adresse IP hôte comprise dans un en-tête du paquet reçu par le dispositif réseau d'agrégation.

12. Procédé selon la revendication 10, comprenant en outre la détermination qu'un paquet n'utilise pas une adresse MAC dans ses communications de couche 3 et la transmission du paquet sans remplacer une adresse dans un en-tête du paquet.

13. Procédé selon la revendication 10, comprenant en outre la création de l'adresse temporaire conformément à la demande de commentaires RFC 4941.
